# EUROPEAN PATENT APPLICATION

(11) **EP 0 531 012 A2**
(43) Date of publication of application: **10.03.1993**
(21) Application number: 92307540.2
(22) Date of filing: 18.08.1992
(51) Int. Cl.: H04N 1/32

(54) **Control subsystem in an image output terminal**

(30) Priority: 06.09.1991 US 755963
(71) Applicant: XEROX CORPORATION, Rochester New York 14644 (US)
(72) Inventor: Kovnat, Larry A., New York 14618 (US); Chiang, Joseph C., Fairport, New York 14450 (US); Crean, Peter A., Penfield, New York 14526-15118 (US); Long, Karen M., Webster, New York 14580 (US); Hunter, Timothy M., Webster, New York 14580 (US); Kwiatkowski, David J., Pittsford New York 14534 (US); Jump, Barry L., East Rochester, New York 14445 (US); Zanghi, John L., Fairport, New York 14450 (US); Smith, Bradley W., Wyoming Castile, New York 14427 (US)
(74) Representative: Goode, Ian Roy

(57) **Abstract**

An image output terminal (14) in a printer includes a control board providing an interface between an electronic subsystem (18) of the printer and a printing unit (28) of the image output terminal. An image disk (26) can be provided in the image output terminal (14) for receipt of image data from the electronic subsystem (18) prior to submission to the printing unit. The control board further provides an interface between the electronic subsystem (18) and the image disk (26) and between the image disk (26) and the printing unit (28) such that communication is decoupled between the electronic subsystem (18) and the printing unit (28) as data is printed while the transfer of data from the electronic subsystem (18) to the image disk (26) is allowed during printing. The control board controls all communication between the electronic subsystem (18) and the printing unit. The control board is able to detect fault conditions in the electronic subsystem, printing unit (28) and control board itself.

## Description

The present invention relates to an image output terminal in a printer and, more particularly, to a control subsystem in an image output terminal.

Electronic printing systems are divided into a controller section having an electronic subsystem and an image output terminal. The electronic subsystem receives electronic data from a remote computer or work station. The electronic data describes a document. The electronic data may be in the form of a page description language, a character code stream such as ASCII or a bit-map.

The electronic subsystem decomposes the data stream provided by the remote host and places the decomposed image data in image files representative of different print jobs.

A user interface in the electronic subsystem enables the operator to interface with the device, thus enabling the operator to program print jobs and other instructions to obtain system operating information, instructions, programming information, diagnostic information, etc.

The electronic subsystem readies the image data for printing and sends the image data to an image output terminal for printing. Since the image output terminal normally receives data in a form ready for printing, all processing of the image data is performed prior to transfer of the data to the image output terminal. Accordingly, throughput of the image data to the image output terminal can consume a great deal of time.

US-A-4,958,298 to Okamoto discloses a printing apparatus having first and second data receiving means for receiving data from a host computer. The printer, upon halting of the printing operation, erases data stored in the first data receiving means and transmits data to the second data receiving means, thus allowing the printing operation to be easily halted and the subsequent printing for other data to be restarted. Accordingly, due to transmission of the data to the second data receiving means, the printing operation takes a longer amount of time than normally required.

US-A-4,866,532 to Ayata et al discloses a printing apparatus having line and page memories for storing input data. The printer also has a controller for controlling the overall printer circuitry. The memories communicate directly with a recording unit via buffer and driving circuits. Processing of the data is thus completed prior to communication with the recording unit via the buffer and driving circuits.

US-A-4,843,405 to Morikawa et al discloses a method of controlling the reproduction of an image in a printer. Input data is received, converted into intermediate coded data and stored in temporary memory. The coded data is then read from the temporary memory to produce bit-map image data which is then stored into a bit-map memory. The bit-map image data is representative of character patterns to be printed in any desired orientation or attitude on a print sheet. Accordingly, the data stored in memory has been fully processed prior to printing.

US-A-4,673,990 to Okada discloses a printer having a memory which stores and supplies data to a printer. Upon input of a temporary stop request during a printing operation, data is supplied from memory until the printing operation is completed. Thereafter, the output of further data is inhibited, and the printer is stopped. The printer thus receives data which has been fully processed.

JP-A-60-134558 to Haganuma discloses a printer control system which uses a memory to store each page of data. The memory is capable of receiving data when data is not being printed. No data can be received by the memory when data is being printed.

While the related art discloses different systems for transferring processed image data to a printer, the related art discloses no system which transfers the image data so that productivity of the printer is maximized and cycling down of the printer is avoided.

An object of the present invention is to provide a printer having an image output terminal which maximizes the productivity of the printer.

Another object of the present invention is to provide a printer having an image output terminal which minimizes the processing requirements of the electronic subsystem.

Another object of the present invention is to provide a printer having an image output terminal having the capability of performing diagnostic routines.

A further object of the present invention is to provide a printer having an image output terminal having the capability to detect and report faults.

To achieve the foregoing and other objects and to overcome the shortcomings discussed above, a printer having an electronic subsystem for decomposition of image data and an image output terminal including a printing unit for printing the image data is provided. The image output terminal of the printer includes a control board which provides an interface between the electronic subsystem and the printing unit. An image disk can be provided in the image output terminal for receipt of image data from the electronic subsystem prior to submission to the printing unit. The control board provides an interface between the electronic subsystem and the image disk and between the image disk and the printing unit. This interface decouples communication between the electronic subsystem and the printing unit as data is printed while the interface allows the transfer of data from the electronic subsystem to the image disk during printing The control board controls all communication between the electronic subsystem and the printing unit. The control board detects fault conditions and the electronic subsystem, printing unit and control board itself.

The invention will be described in detail with reference to the following drawings in which like reference numerals refer to like elements, and wherein:
Figure 1 is a block diagram of the electronic subsystem side and the image output terminal side of a printer according to the present invention;
Figure 2 is a block diagram of an image output terminal control board according to the present invention; and
Figure 3 is an illustration of a section of a photoreceptor used in accordance with the present invention.

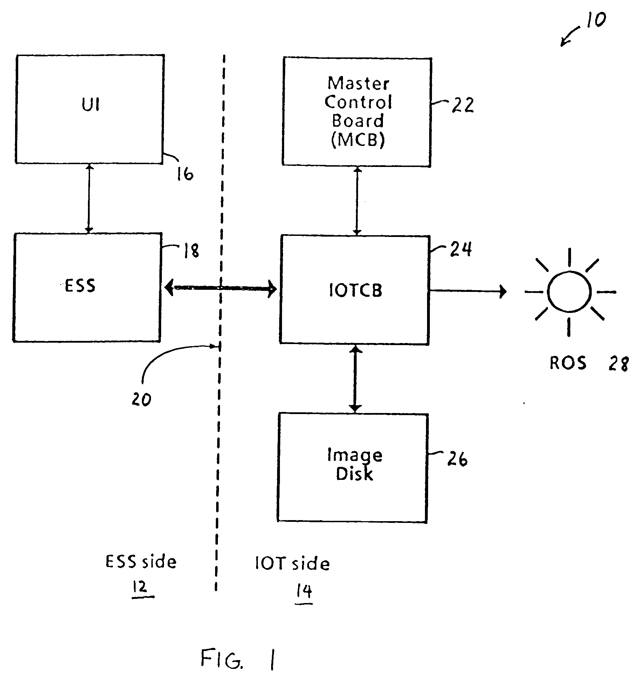

Referring now to the drawings, and particularly to Figure 1 thereof, a block diagram 10 of an electronic subsystem side 12 and an image output terminal side 14 of a printer according to the present invention are illustrated. Electronic subsystem side 12 includes electronic subsystem 18. A user interface 16 enables an operator to interface with the printer. User interface 16 enables the operator to program print jobs and other instructions, to obtain system operating information, instructions, programming information, diagnostic information, etc. User interface 16 can include a controller and display comprising, for example, an interactive touch screen, keyboard and mouse.

Electronic subsystem side 12 of the device communicates with image output terminal side 14 by way of an interface 20. Communications between electronic subsystem (ESS) 18 and a printing unit such as a raster output scanner (ROS) 28 are provided by way of an image output terminal control board (IOTCB) 24 which will be described in greater detail hereinbelow.

A master control board (MCB) 22 provides instructions to the IOTCB 24 via a proprietary communications bus. In response to instructions from the MCB 22, IOTCB 24 begins and ends transfer of data from the ESS 18 to a photoreceptor of ROS 28.

An image or buffer disk 26 can be provided in the image output terminal (IOT). The image disk 26 allows the transfer of image data from ESS 18 to the ROS 28 to be decoupled from the actual printing of the image data. When the IOT is in a run mode, the image data is read from image disk 26 and printed by ROS 28. The reading of the image data is controlled by IOTCB 24. During an interplate gap, the image data from ESS 18 is written to the disk, the writing of the image data also being controlled by IOTCB 24. Accordingly, the IOT performs interleaved printing, i.e., concurrent reading and writing of image data.

The ESS 18 provides image data serially. When image disk 26 is included, IOTCB 24 packs the image data into bytes and clocks the data byte-serially to the image disk 26. ESS 28 adds a predetermined number of leading bits to each scanline. The IOTCB 24 strips off the leading bits so that only actual image data is buffered on image disk 26. During printing, IOTCB 24 clocks off the image data in a byte-serial fashion. Each byte is serialized, and the data is sent to ROS 28.

Image disk 26 enables the receipt of image data from ESS 18 to be interleaved with the printing to the photoreceptor of ROS 28 of images previously stored on image disk 26 by writing image data from ESS 18 to image disk 26 during interplate gaps. The pitch timing is such that there is not sufficient time to transfer a full plate of data from ESS 18 to image disk 26 within one interplate gap. The transfer of image data from ESS 18 to image disk 26 must, therefore, be suspended while a plate of data previously stored on image disk 26 and part of a currently printing job is printed. When printing of this plate is completed, the receipt of data from ESS 18 to image disk 26 is resumed.

The writing of image data from ESS 18 to image disk 26 must be suspended on a disk sector boundary. The IOTCB 24 will receive a message from MCB 22 instructing suspension of the current ESS transfer and preparation to read data from image disk 26 for transfer to the photoreceptor of ROS 28. The IOTCB 24 counts pixels and suspends data transfer from ESS 18 to image disk 26 precisely on a sector boundary.

The use of image disk 26 in the IOT thus frees ESS 18 to perform decomposition of new images while the IOT is simultaneously printing the current print job. The simultaneous decomposition and printing is particularly advantageous when multiple copies are being printed since ESS 18 need only perform the decomposition of the images once. The printing of subsequent copies is controlled by the image output terminal. ESS 18 keeps the image output terminal side 14 primed with new print jobs. Accordingly, cycle downs between print jobs are eliminated in most cases, thus maximizing the run time of the printer.

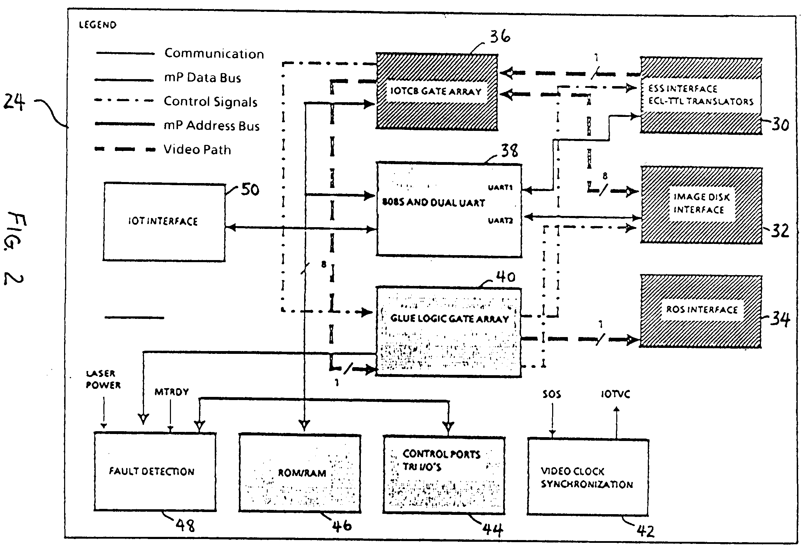

Figure 2 illustrates a block diagram of IOTCB 24. IOTCB 24 provides an interface between ESS 18 and ROS 28. Accordingly, IOTCB 24 controls all communications and data transfer between ESS 18 and ROS 28. Furthermore, when image disk 26 is provided in the image output terminal, IOTCB 24 controls all communications and data transfer to and from image disk 26. As an interface between ESS 18 and ROS 28, IOTCB 24 provides synchronization and timing signals to ESS 18. IOTCB 24 is further responsible for the correct placement and alignment of video information on the photoreceptor of ROS 28. IOTCB 24 controls a motor, shutter and laser of ROS 28 and can further detect and report faults in ROS 28. IOTCB 24 is capable of generating test patterns used for various diagnostic routines.

IOTCB 24 includes an interface 30 for interfacing with ESS 18. Image data is transferred from ESS 18 by ESS interface 30 to IOTCB gate array 36. Video data provided to IOTCB gate array 36 is transferred to glue logic gate array 40 which, in turn, transfers the video data to ROS interface 34 for providing data input to ROS 28.

When image disk 26 is included in the IOT, the video data transferred to IOTCB gate array 36 is transferred to image disk interface 32 for supply to image disk 26. Thereafter, when ROS scanner 28 is ready to print the image data, the image data is supplied from image disk 26 via image disk interface 32, IOTCB gate array 36, glue logic gate array 40 and ROS interface 34 to ROS 28.

Signals for controlling the transfer of data are provided from IOTCB gate array 36 to glue logic gate array 40 and from glue logic gate array 40 to image disk interface 32. Control signals are also provided from glue logic gate array 40 to ESS interface 30 to control the transfer of image data from ESS interface 30 to IOTCB gate array 36.

A DUAL UART 38 drives signal lines for communication between IOTCB 24 and ESS 18 from a first UART channel. These command and status signal lines operate, for example, at 9600 baud. Communication with IOT interface 50 is provided via the proprietary communications bus. When image disk 26 is provided, IOTCB 24 communicates with image disk 26 by way of image disk interface 32 through a second UART channel also operating, for example, at 9600 baud.

Raster output scanner 28 transmits image information provided thereto to an imaging surface such as a photoreceptor. A light source, such as a laser light source, generates a light beam which is modulated in accordance with image information contained in video image signals or pixels. The modulated light beam is applied to a rotating, multi-faceted polygon which scans the modulated light beam across the image plane of the photoreceptor. Each facet of the polygon is mirrored. The polygon is spun by a motor, the motor speed controlling image resolution in the direction of movement of the imaging surface. Image resolution within a scan line is a function of the image signal or pixel rate. The resolution in the direction of scan is determined by the image signal or pixel clock frequency. Each mirrored facet of the polygon provides image information corresponding to one horizontal scan line. The pixel clock frequency is commonly controlled by a pixel clock board.

During operation of ROS 28, the rotating polygon scans or sweeps a beam across the photoreceptor to trace a scanline thereon. As the beam is swept across the photoreceptor, pulses are generated to establish start-of-scan (SOS) and end-of-scan (EOS) signals. The width of the SOS-EOS pulse (LineSync) is dependent upon the velocity at which the polygon rotates. As the scan lines corresponding to a page have been traced, a PageSync pulse is generated.

In the present invention, IOTCB 24 functions as a pixel clock board and is thus responsible for transmitting to ROS 28 the image data received from ESS 18. IOTCB 24 generates PageSync, LineSync and video clock signals and provides these signals to ESS 18. IOTCB 24 receives 1 bit/pixel image data in serial fashion from ESS 18. IOTCB 24 also receives a return video clock so that the image data can be reclocked. ESS 18 derives the return video clock by inverting video clock and retransmitting it back to IOTCB 24.

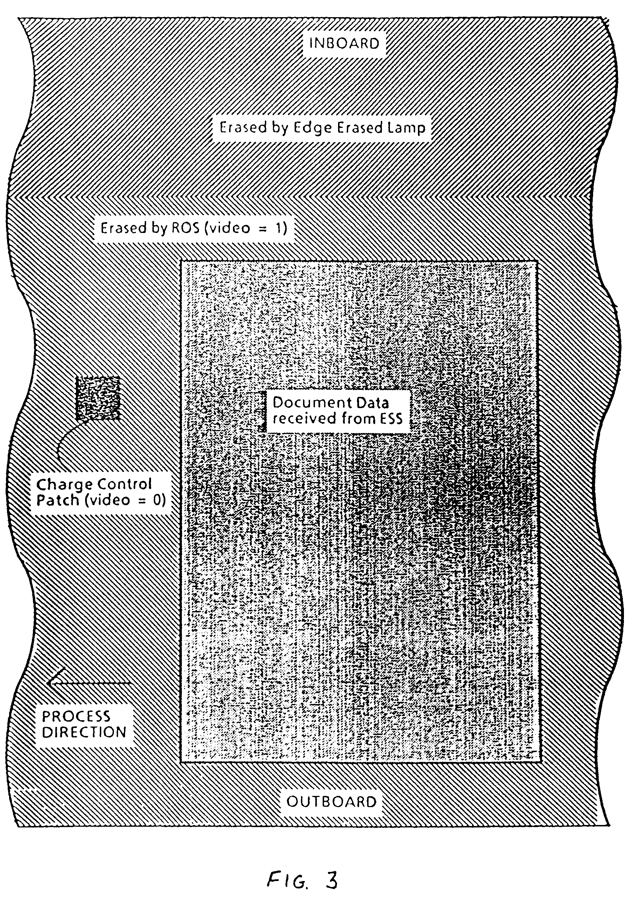

IOTCB 24 is further responsible for multiplexing edge erase and charge control patch generation data onto a video line. Figure 3 illustrates the arrangement of the patch, edge erase and document data on the photoreceptor. The positions of the patch and the document data are controlled by IOTCB 24.

IOTCB 24 generates an accurate pixel clock for clocking video data to ROS 28. The frequency of the pixel clock is determined by a fast scan magnification specification. The allocation of IOTCB 24 to fast scan magnification error is preferably less than 0.05%. IOTCB 24 maintains fast scan jitter, i.e. a motor speed error occurring at every scan line causing image distortion in the scan line direction, to less than 1/8 of a pixel by registering the pixel clock to the SOS signal generated by ROS 28. Further, IOTCB 24 generates a critical machine timing signal LE @ REG, the signal being generated at a specific number of machine clocks after a pitch reset. The software of IOTCB 24 generates this signal via a hardware port. The signal is registered to the SOS signal of ROS 28 to ensure that pixels are registered for each of a plurality of separations, thus minimizing registration errors resulting in distorted, blurred images.

Video clock synchronization is performed by registering SOS to a master clock frequency, that is, eight times the base video clock frequency. This master clock frequency is then divided down by eight to produce the IOT video clock.

IOTCB 24 has control ports 44 for actuating the active components within ROS 28, i.e., the polygon motor, shutter and laser.

IOTCB 24 is further capable of performing various diagnostic routines. Upon power-up or after a system restart, IOTCB 24 can perform a series of tests of its own on board hardware. IOTCB 24 can check Read only and static memory communications links and the gate arrays responsible for generating timing signals. If an error is detected, IOTCB 24 can, for example, cause an LED to be flashed an appropriate number of times to indicate the faulty component.

IOTCB 24 can generate a number of test patterns from an on board test pattern ROM 46. These test patterns can measure image alignment and magnification, pass-to- pass registration and motion quality in process and cross- process directions. IOTCB 24 can generate a complete set of 16 half-toned gray levels to support process control diagnostic routines used to set up the machine.

A button can be provided on IOTCB 24 to cause the IOT to print a test pattern to determine the cause of a lack of communication between ESS 18 and the IOT. Thus, the problem can be localized and isolation of the IOT is prevented. If printing of the test pattern is successful, the IOTCB 24 concludes that the communications problem is localized in the ESS-IOT interface. However, if printing is unsuccessful, the IOTCB 24 can blink its self-test LED to indicate that the fault is located with the IOT.

Accordingly, IOTCB 24 is capable of detecting numerous fault conditions. IOTCB 24 can detect ROS fault conditions such as ROS polygon motor failure during power up, ROS polygon motor speed outside of a range of specified motor speed, ROS polygon motor not being ready for operation and SOS not being detected at IOTCB 24.

IOTCB 24 can detect communications fault conditions such as non-response or invalid messages from MCB 22 at IOTCB 24 and IOTCB-IDM (image disc module) communications failure in a print mode.

IOTCB 24 can detect IOT timing signal fault conditions such as machine clock not being detected at IOTCB 24, LE @ REG not being generated at IOTCB 24 and pitch reset not being detected at IOTCB 24.

IOTCB 24 can further detect ESS timing signal fault conditions such as video clock not being generated at IOTCB 24, return video clock not being detected at IOTCB 24 and ESS 18 to IOTCB 24 plate transfer time being outside of an allowable window.

In accordance with the above description, the IOTCB 24 of the present invention controls all communications between the ESS 18 and the ROS 28. IOTCB 24 performs a plurality of functions such as data transfer, communications, fault detection, fault reporting and various other diagnostic routines. The use of IOTCB 24 maximizes the productivity of the printer by enabling increased throughput to the IOT.

The use of image disk 26 further maximizes the productivity of the printer by interleaving the data transfer, thus keeping the IOT primed with new jobs and eliminating cycle downs between jobs. The productivity of the system according to the present invention is thus greatly enhanced.

While this invention has been described in conjunction with specific embodiments thereof, it is evident that many alternatives, modifications and variations will be apparent to those skilled in the art. Accordingly, the preferred embodiments of the invention as set forth herein are intended to be illustrative, not limiting. Various changes may be made without departing from the spirit and scope of the invention as defined in the following claims.

## Claims

1. A printer having an electronic subsystem (18) for decomposition of image data and an image output terminal (14) including a printing unit (28) for printing the image data, the image output terminal (14) comprising:
control means (24) for controlling video data transfer from the electronic subsystem (18) to the printing unit (28) and for controlling all communications between the electronic subsystem (18) and the printing unit (28).

2. A printer having an electronic subsystem (18) for decomposition of image data and an image output terminal (14) including a printing unit (28) for printing the image data, the image output terminal (14) comprising:
an image disk (26) in the image output terminal, said image disk (26) receiving data from the electronic subsystem (18) and supplying the data to the printing unit (28) for printing of the data; and
decoupling means (30-46) for decoupling the electronic subsystem (18) from the printing unit (28) when the printing unit (28) is printing data, said decoupling means (30-46) allowing the image disk (26) to receive data from the electronic subsystem (18) during printing of the data by the printing unit (28).

3. The printer according to claim 2, wherein said image output terminal (14) includes a control means (24) for providing an interface between the electronic subsystem (18) and the image disk (26) and between the image disk (26) and the printing unit (28), said decoupling means (30-46) being provided in said control means (24), said control means (24) controlling the data interface to and from the image disk.

4. The printer according to claim 2 or 3 wherein said control means (24) controls all communication to and from the image disk (26).

5. The printer according to claim 2, 3 or 4 wherein said control means (24) controls image data transfer from the electronic subsystem (18) to the printing unit (28) and controls all communications between the electronic subsystem (18) and the printing unit (28).

6. The printer according to any of the preceeding claims, wherein the printing unit (28) is a raster output scanner which includes a polygon motor, a shutter and a laser, said control means (24) controlling at least one of said polygon motor, shutter and laser.

7. The printer according to claim 6, wherein the raster output scanner (28) provides image information on a photoreceptor, said control means (24) controlling placement and alignment of the image information on the photoreceptor.

8. The printer according to claim 6 or 7, wherein the control means (24) detects fault conditions in at least one of the raster output scanner (28) and/or the electronic subsystem (18).

9. The printer according to claim 4, wherein said control means (24) comprises a control board, and said control board generates test patterns for testing operation of the control board.

10. The printer according to any of the preceding claims, wherein: the image output terminal (14) includes a raster output scanner for printing the image data, the raster output scanner (28) including a polygon motor, a shutter and a laser;
an image disk (26) for receiving data from the electronic subsystem (18) and for supplying the data to the raster output scanner (28) for printing of the data; and
control means (24) comprising a control board for providing an interface between the electronic subsystem (18) and the image disk (26) and between the image disk (26) and the raster output scanner (28), said control means (24) controlling image data transfer from the electronic subsystem (18) to the image disk (26) and from the image disk (26) to the raster output scanner (28), said control means (24) controlling all communications between the electronic subsystem (18) and the raster output scanner (28), said control means (24) detecting fault conditions in at least one of the electronic subsystem (18) and the raster output scanner (28), said control means (24) generating a pixel clock for control of image resolution in a scan line, said control means including a decoupling means (30-46) for decoupling the electronic subsystem (18) from the raster output scanner when data is printed, said decoupling means (30-46) allowing the transfer of data from the electronic subsystem (18) to the image disk (26) during printing of the data by the raster output scanner (28).
